# FASCICULE DE BREVET EUROPEEN

(11) **EP 3 906 359 B1**
(45) Date de publication et mention de la délivrance du brevet: **15.05.2024**
(21) Numéro de dépôt: 20706797.6
(22) Date de dépôt: 06.02.2020
(51) Int. Cl.: F01D 5/18, F02C 7/18, F02C 6/08, F01D 9/06, F01D 25/12, F02K 3/06, F02K 3/115

(54) **AUBE DE TURBOMACHINE**
SCHAUFELBLATT FÜR EIN TURBINENTRIEBWERK
TURBOMACHINE VANE

(30) Priorité: 12.02.2019 FR 1901392
(43) Date de publication de la demande: 10.11.2021
(73) Titulaire: SAFRAN AIRCRAFT ENGINES, 75015 Paris (FR)
(72) Inventeur: ZACCARDI, Cédric, 77550 Moissy-Cramayel (FR); PERDRIGEON, Christophe, Marcel, Lucien, 77550 Moissy-Cramayel (FR); PIKOVSKY, Catherine, 77550 Moissy-Cramayel (FR)
(74) Mandataire: Brevalex
(86) Numéro de dépôt international: PCT/FR2020/050207
(87) Numéro de publication internationale: WO 2020/165527

(56) Documents cités:
- EP-A1- 3 165 451
- US-A1- 2015 023 776
- US-A1- 2017 002 685
- US-A1- 2018 187 602
- US-A1- 2019 003 315
- US-B2- 9 945 325

## Description

### DOMAINE TECHNIQUE

L'invention concerne une aube de turbomachine configurée pour permettre le refroidissement d'un flux d'air sous pression destiné au refroidissement d'au moins un composant de la turbomachine ou destiné à la pressurisation d'enceintes contenant un lubrifiant.

L'invention concerne plus particulièrement une aube de turbomachine formant un échangeur de chaleur entre le flux d'air sous pression et un flux d'air circulant dans une veine secondaire de la turbomachine.

### ÉTAT DE LA TECHNIQUE ANTÉRIEURE

Dans les turbomachines actuelles, il y a de nombreux circuits d'air internes au moteur. Ces circuits assurent différentes fonctions.

Parmi ces circuits, un circuit d'air réalise à la fois la fonction de pressurisation d'enceintes d'huile de lubrification pour éviter que l'huile ne sorte de ces enceintes et la fonction de refroidissement de l'arbre basse pression.

L'air de ce circuit est prélevé au niveau de la veine primaire, en aval du compresseur basse pression, de préférence entre le compresseur basse pression et le compresseur haute pression.

Cet air est ensuite évacué par les déshuileurs, pour l'air passant par les enceintes et à l'aval de la turbine basse pression pour le reste.

Ce circuit va subir des pertes de charges dues aux changements de rayons, trous, joints, etc. Il faut donc que le rapport de pressions (pression prélevée / pression sortante) soit assez grand pour que l'air circule correctement et avec le débit souhaité.

Parmi les contraintes sur ce circuit d'air, il faut que la température de l'air soit assez froide pour refroidir l'arbre basse pression et pour ne pas trop réchauffer l'huile des enceintes. La pression de l'air doit être suffisante pour que le rapport de pression mentionné précédemment soit assez important et permette de faire circuler le débit spécifié.

Aussi, dans certaines turbomachines, le cycle thermodynamique est tel que le rapport de pressions est trop faible pour que ce circuit respecte ces fonctions. Il faut donc trouver une solution de contournement.

Le document EP0743435A1 décrit une turbomachine comportant un échangeur de chaleur intégré à une aube de redresseur situé dans la veine secondaire. Selon ce document, l'aube comporte une cavité débouchant à chaque extrémité radiale de l'aube pour l'entrée ou la sortie du flux d'air à refroidir.

US2017/002685A1 décrit une autre turbomachine comportant un échangeur de chaleur intégré à une aube de redresseur situé dans la veine secondaire.

L'efficacité du refroidissement du flux d'air à refroidir est limitée car les surfaces d'échange de chaleur sont limitées.

L'invention a pour but de proposer une aube de turbomachine et une turbomachine permettant d'optimiser l'échange de chaleur.

### EXPOSÉ DE L'INVENTION

L'invention concerne une aube de turbomachine, correspondant aux caractéristiques de la revendication 1, comportant un corps s'étendant principalement dans un plan défini par un axe principal B et une direction longitudinale, qui est délimité par une paroi d'intrados, une paroi d'extrados, un bord d'attaque situé à une première extrémité longitudinale du corps et un bord de fuite situé à une deuxième extrémité longitudinale du corps, caractérisée en ce que le corps de l'aube comporte une pluralité de premiers conduits de circulation d'un flux de gaz qui s'étendent principalement selon la direction de l'axe principal B et une pluralité de deuxièmes conduits de circulation d'un deuxième flux de gaz qui s'étendent principalement selon la direction longitudinale.

L'intégration de deux ensembles de conduits dans le corps de l'aube permet d'augmenter les surfaces d'échange de chaleur entre les deux flux d'air, améliorant par conséquent le refroidissement du deuxième flux de gaz.

De préférence, chaque premier conduit comporte deux extrémités qui sont débouchantes dans une même extrémité du corps selon l'axe principal B.

De préférence, l'ensemble des extrémités des premiers conduits forme un faisceau se resserrant progressivement en se rapprochant de ladite au moins une extrémité du corps.

Chaque deuxième conduit comporte deux extrémités qui sont débouchantes dans l'une de la paroi d'intrados ou de la paroi d'extrados du corps.

De préférence, chaque deuxième conduit présente une ondulation selon une direction transversale perpendiculaire à un plan longitudinal vertical et chaque premier conduit est disposé dans un tronçon concave du deuxième conduit.

De préférence, les premiers conduits sont disposés transversalement de part et d'autre de chaque deuxième conduit.

De préférence, l'aube est réalisée par un procédé de technologie additive.

L'invention concerne aussi une turbomachine d'aéronef comportant une veine primaire d'écoulement d'air dans laquelle sont aménagés un compresseur basse pression et un compresseur haute pression,
une veine secondaire d'écoulement d'air qui est située autour de la veine primaire et coaxialement à la veine primaire, comportant un redresseur du flux d'air s'écoulant dans la veine secondaire, comportant une pluralité d'aubes réparties autour d'un axe principal A de la turbomachine,
un circuit d'air pressurisé prélevant de l'air entre le compresseur basse pression et le compresseur haute pression ou dans le compresseur haute pression pour produire un flux d'air pressurisé qui alimente au moins un composant de la turbomachine,
caractérisée en ce que la pluralité d'aubes comporte au moins une aube selon l'invention, pour laquelle son axe principal B est orienté principalement radialement par rapport à un axe principal A de la turbomachine et la direction longitudinale est sensiblement parallèle audit axe principal A, comportant des premiers conduits et des deuxièmes conduits et en ce que le flux d'air pressurisé s'écoule dans les premiers conduits de ladite au moins une aube et une partie du flux d'air s'écoulant dans la veine secondaire s'écoule dans les deuxièmes conduits de ladite au moins une aube.

De préférence, l'axe principal B de ladite au moins une aube est orienté principalement radialement par rapport à un axe principal A de la turbomachine et la direction longitudinale de ladite au moins une aube et les deuxièmes conduits de ladite au moins une aube sont sensiblement parallèles à l'axe principal A correspondant à la direction d'écoulement du flux d'air dans la veine secondaire.

### BRÈVE DESCRIPTION DES DESSINS

D'autres caractéristiques et avantages de l'invention apparaîtront à la lecture de la description détaillée qui suit pour la compréhension de laquelle on se reportera aux figures annexées parmi lesquelles :
- [Fig. 1] est une représentation schématique en section axiale d'une turbomachine d'aéronef comportant un circuit d'air pressurisé réalisé selon l'invention ;
- [Fig. 2] est une vue similaire à celle de la figure 1, montrant une variante de réalisation du circuit d'air pressurisé ;
- [Fig. 3A] est une représentation schématique en perspective d'une aube réalisée selon l'invention ;
- [Fig. 3B] est une représentation schématique en perspective avec arrachement de l'aube représentée à la figure 3A, montrant les premiers et deuxièmes conduits ;
- [Fig. 4] est une section selon un plan longitudinal transversal de l'aube représentée à la figure 3A ;
- [Fig. 5A] est un détail en perspective d'une aube réalisée selon un deuxième mode de réalisation de l'invention ;
- [Fig. 5B] est une représentation schématique en perspective avec arrachement de l'aube représentée à la figure 5A, montrant les premiers et deuxièmes conduits ;
- [Fig. 6] est une section selon un plan longitudinal transversal de l'aube représentée à la figure 5B.

### EXPOSÉ DÉTAILLÉ DE MODES DE RÉALISATION PARTICULIERS

Pour la description de l'invention, on adoptera à titre non limitatif les orientations verticale, longitudinale et transversale selon le repère V, L, T indiqué aux figures.

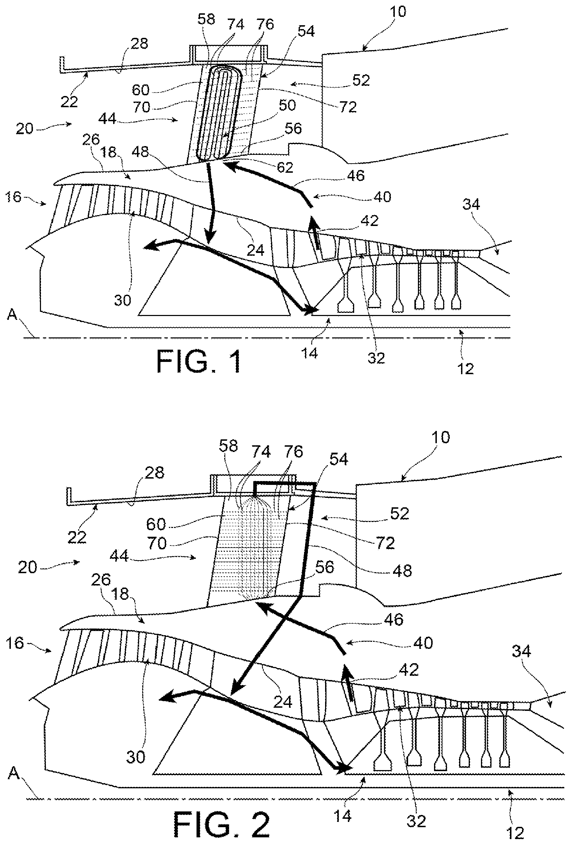

On a représenté à la figure 1 une turbomachine 10 d'aéronef possédant un axe principal A.

La turbomachine 10 comporte, en s'éloignant de son axe principal A, un arbre basse pression 12, un arbre haute pression 14, une veine primaire 16 d'écoulement d'air, une veine secondaire 20 d'écoulement d'air, un compartiment inter-veine 18 séparant la veine primaire 16 et la veine secondaire 20 et une virole 22 de carter intermédiaire.

Le compartiment inter-veine 18, aussi appelé "core compartiment", est délimité radialement par rapport à l'axe principal A par une paroi radialement interne 24 délimitant l'extérieur de la veine primaire 16 et une paroi radialement externe 26 délimitant l'intérieur de la veine secondaire 20. La virole 22 comporte une paroi radialement interne 28 délimitant l'extérieur de la veine secondaire 20.

La veine primaire 16 comporte, d'amont en aval, selon le sens d'écoulement d'air dans celle-ci et le long de l'axe principal A, c'est-à-dire ici de gauche à droite en se reportant à la figure 1, un compresseur basse pression 30, un compresseur haute pression 32, une chambre de combustion 34, une turbine haute pression et une turbine basse pression (non représentées).

La veine secondaire 20 comporte un redresseur 52 qui a pour but de rediriger le flux d'air s'écoulant dans la veine secondaire 20, afin que celui-ci ait un écoulement orienté principalement axialement, c'est-à-dire principalement parallèle à l'axe principal A.

Le redresseur 52 comporte à cet effet une pluralité d'aubes 54 réparties régulièrement autour de l'axe principal A de la turbomachine 10 qui agissent sur le flux d'air circulant dans la veine secondaire 20.

Chaque aube 54 s'étend principalement dans un plan défini par un axe principal B et une direction longitudinale. Lorsque l'aube 54 est montée dans le redresseur 52, l'axe principal B est orienté principalement radialement par rapport à l'axe principal A, c'est-à-dire qu'il est sensiblement incliné par rapport à l'orientation radiale et la direction longitudinale est parallèle à l'axe principal A.

Chaque aube 54 comporte une première extrémité dite de pied 56 selon l'axe principal B pour sa liaison avec le compartiment inter-veine 18 et une deuxième extrémité dite de tête 58 selon l'axe principal B, pour sa liaison avec la virole 22. La première extrémité 56 est radialement interne et la deuxième extrémité est radialement externe par rapport à l'axe principal A lorsque l'aube 54 est montée dans le redresseur 52.

La turbomachine 10 comporte en outre un circuit d'air pressurisé 40 qui est conçu pour à la fois refroidir l'arbre basse pression 12 et alimenter en air pressurisé des enceintes contenant de l'huile de lubrification de parties mobiles, qui sont situées au niveau de l'arbre basse pression et qui permettent de pressuriser ces enceintes.

Cet air pressurisé peut aussi être dirigé vers un réducteur de vitesse (non représenté) qui est agencé entre l'arbre basse pression 12 et la soufflante de la turbomachine pour ventiler ou refroidir celui-ci.

Le réducteur de vitesse permet de dissocier la vitesse de rotation de la soufflante avec celle de l'arbre basse pression 12 par lequel la soufflante est entraînée.

Cela permet notamment de réduire la vitesse de rotation des pales de la soufflante par rapport à celle des compresseurs basse pression, et ainsi d'optimiser leurs efficacités respectives et donc d'améliorer le rendement de propulsion. Un tel réducteur est particulièrement avantageux dans le cas d'un turboréacteur à fort taux de dilution, c'est-à-dire pour lequel le rapport entre la quantité de flux d'air s'écoulant dans la veine secondaire et la quantité de flux d'air s'écoulant dans la veine primaire, est élevé.

Ce circuit d'air pressurisé 40 comporte au moins un point de prélèvement d'air 42 qui est situé sur la paroi radialement interne 24 du compartiment inter-veine 18. Ce point de prélèvement 42 est situé entre le compresseur basse pression 30 et le compresseur haute pression 32 ou bien dans le compresseur haute pression 32, comme c'est ici représenté à la figure 1.

Dans ce dernier cas, le point de prélèvement est situé au niveau de l'un des étages du compresseur haute pression 32 qui est déterminé en fonction de la pression de l'air pressurisé, sa température et de la possibilité de réaliser un prélèvement sur les premiers étages du compresseurs haute pression 32 malgré la présence d'aubes à calage variables (communément désignées VSV pour Variable Stator Vanes).

L'air prélevé est à une pression suffisamment importante pour pressuriser les enceintes d'huile. Par contre, la température de cet air est trop élevée pour permettre le refroidissement de l'arbre basse pression 12 et aussi pour avoir de bonnes conditions de fonctionnement du circuit de lubrification.

Le circuit d'air pressurisé 40 comporte à cet effet un échangeur de chaleur 44 permettant de réduire la température de l'air pressurisé.

Cet échangeur de chaleur 44 est du type air-air et la source d'air froid est constituée par l'air circulant dans la veine secondaire 20.

Ici, l'échangeur de chaleur 44 est formé dans au moins une aube 54 du redresseur 52 au travers de laquelle l'air pressurisé circule pour échanger de la chaleur avec l'air circulant dans la veine secondaire.

Le circuit d'air pressurisé 40 comporte, dans le sens d'écoulement d'air dans celui-ci, un tronçon amont 46 qui s'étend depuis le point de prélèvement d'air 42 jusqu'à l'aube 54, l'aube 54, un tronçon aval 48 qui s'étend depuis l'aube 54 jusqu'à l'arbre basse pression 12 et des moyens (non représentés) de répartition de l'air pressurisé en direction des points de refroidissement de l'arbre basse pression 12 et des enceintes de pressurisation d'huile.

Ainsi, le tronçon amont 46 du circuit d'air pressurisé 40 s'étend au travers du compartiment inter-veine 18, depuis sa paroi radialement interne 24 au niveau de laquelle le tronçon amont 46 est relié au point de prélèvement d'air 42, jusqu'à la paroi radialement externe 26 du compartiment inter-veine 18, au niveau de laquelle il est relié à l'aube 54.

Le tronçon aval 48 du circuit d'air pressurisé s'étend au travers du compartiment inter-veine 18, à partir de sa paroi radialement externe au niveau de laquelle il est relié à l'aube 54 et il traverse aussi la veine primaire 16 dans des bras profilés (non représentés) placés entre le compresseur basse pression 30 et haute pression 32, avantageusement.

Selon un deuxième mode de réalisation représenté à la figure 2, le tronçon aval 48 du circuit d'air pressurisé 40 est relié à l'extrémité radiale externe 58 de l'aube 54, il traverse la veine secondaire 20 et le compartiment inter-veine 18, par exemple en passant au travers de bras profiles (non représentés) puis il traverse aussi la veine primaire 16 dans des bras profilés (non représentés) placés entre le compresseur basse pression 30 et haute pression 32, avantageusement.

Comme on l'a dit plus haut, la source d'air froid de l'aube 54 est constituée de l'air circulant dans la veine secondaire 20.

C'est donc par le matériau constitutif de l'aube 54 que les échanges de chaleur se produisent.

L'aube 54 est constituée d'un corps 60 d'orientation principale verticale, d'une extrémité inférieure dite de pied 56 et d'une extrémité supérieure 58 dite tête.

Le corps 60 est délimité transversalement par une paroi d'intrados 66 de et une paroi d'extrados 68. Les deux parois d'intrados 66 et d'extrados 68 se raccordent à une première extrémité longitudinale du corps au niveau d'un bord d'attaque 70, qui est un bord amont du corps selon le sens d'écoulement d'air dans la veine secondaire 20, et ils se raccordent à une deuxième extrémité longitudinale du corps au niveau d'un bord de fuite 72, qui est un bord aval du corps 60 selon le sens d'écoulement d'air dans la veine secondaire 20

Comme on l'a dit précédemment, le flux d'air comprimé circule au travers de l'aube 54. A cet effet, le corps 60 comporte une pluralité de conduits 74 qui sont orientés dans le corps 60 selon la direction définie par l'axe principal B de l'aube 54.

Selon le mode de réalisation représenté à la figure 1, les conduits 74 sont débouchants uniquement au niveau du pied 56 de l'aube 54. Ils ont alors une forme de U recourbé au niveau de la tête 58 de l'aube 54, c'est-à-dire comportant deux branches globalement parallèles à l'axe principal B et un tronçon recourbé reliant ces deux branches, qui est situé au niveau de la tête 58 de l'aube 54.

Selon le mode de réalisation représenté à la figure 2, les conduits 74 sont débouchants à leurs extrémités au niveau du pied 56 et de la tête 58 de l'aube 54. La tête et le pied de l'aube 54 comportent à cet effet des moyens de raccordement (non représentés au tronçon amont 46 et au tronçon aval 48. Aussi, pour favoriser le raccordement des premiers conduits 74, l'ensemble des extrémités des premiers conduits 74 sont inclinées les unes par rapport aux autres et par rapport à l'orientation principale de l'axe B pour former un faisceau se resserrant progressivement en se rapprochant de la tête 58 ou du pied 56 de l'aube 54.

Dans la description qui va suivre, on fera référence au mode de réalisation selon lequel les conduits 74 sont débouchants radialement à chaque extrémité 56, 58 de l'aube 54, comme représenté à la figure 2. Il sera compris que l'invention n'est pas limitée à ce mode de réalisation et qu'elle s'applique aussi à des conduits courbés en forme de U, comme représenté à la figure 1.

Comme on peut le voir notamment à la figure 2, les conduits 74 sont orientés principalement selon la direction de l'axe principal B et ils sont décalés longitudinalement pour être répartis longitudinalement sur toute la longueur du corps 60.

La multiplicité de ces conduits 74 permet d'avoir une surface d'échange de chaleur importante entre le corps 60 de l'aube 54 et le flux d'air pressurisé et d'utiliser le maximum de la surface et du volume de l'aube.

Le flux d'air circulant dans la veine secondaire 20 est en contact avec la paroi d'intrados 66 et la paroi d'extrados 68 pour l'échange de chaleur avec le corps 60 de l'aube 54.

Pour augmenter encore la surface d'échange de chaleur entre le corps 60 de l'aube 54 et le flux d'air circulant dans la veine secondaire 20, le corps 60 de l'aube 54 comporte une pluralité d'autres conduits 76 d'orientation principale longitudinale dans lesquels une partie du flux d'air circulant dans la veine secondaire 20 est destinée à circuler.

Dans la description qui va suivre, les conduits 74 traversés par le flux d'air pressurisé seront désignés par "premiers conduits" et les conduits 76 traversés par le flux d'air frais circulant dans la veine secondaire 20 seront désignés par "deuxièmes conduits".

Les deuxièmes conduits 76 sont orientés selon la direction principale longitudinale et ils sont distribués dans le corps 60 selon la direction de l'axe principal B.

La combinaison des premiers conduits 74 et des deuxièmes conduits 76 forme un maillage dans le corps 60 de l'aube 54, permettant ainsi de favoriser les échanges de chaleur entre les deux flux d'air.

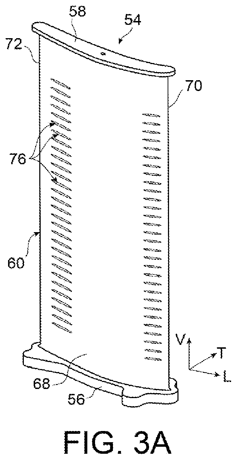

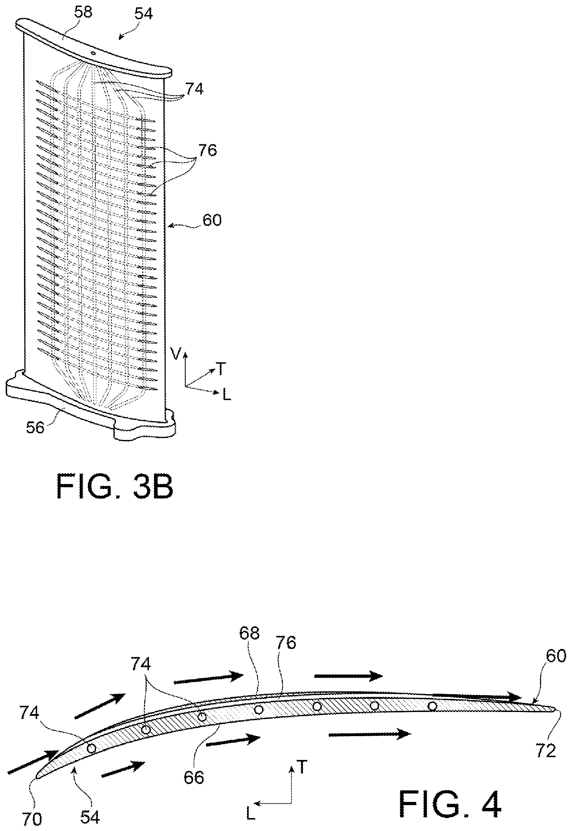

Selon un premier mode de réalisation représenté aux figures 3A à 4, les deuxièmes conduits 76 sont formés entre la paroi d'extrados 68 et les premiers conduits 74.

Les deux extrémités de chaque deuxième conduit 76 sont en outre débouchantes dans la paroi d'extrados 68.

Cette configuration permet de prélever une partie de l'air s'écoulant le long de la paroi d'extrados 68 et de rejeter l'air réchauffé dans le même sens d'écoulement, le long de la paroi d'extrados 68 en produisant de faibles perturbations aérodynamiques.

Aussi, cette position relative des deuxièmes conduits 76 par rapport à la paroi d'extrados 68 et par rapport aux premiers conduits 74 permet d'éloigner les premiers conduits 74 de la paroi d'extrados 68, qui est une paroi de l'aube 54 la plus exposée à des agressions externes telles que de la grêle par exemple.

Il sera compris que l'invention n'est pas limitée à ce mode de réalisation et que les deuxièmes conduits 76 peuvent être formés entre la paroi d'intrados 66 et les premiers conduits 74 et que leurs deux extrémités peuvent être débouchantes dans la paroi d'intrados 66.

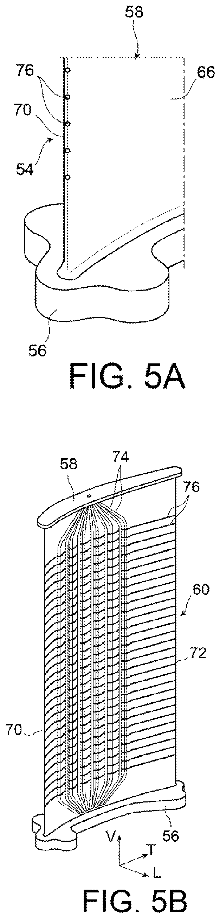

Selon un deuxième mode de réalisation représenté aux figures 5A à 6, les deuxièmes conduits 76 traversent longitudinalement la totalité du corps 60 de l'aube 54, depuis le bord d'attaque 70 jusqu'au bord de fuite 72.

Ce mode de réalisation permet de limiter la génération de perturbations sur la paroi d'intrados 66 ou sur la paroi d'extrados 68. Aussi, le prélèvement d'une partie du flux d'air circulant dans la veine secondaire 20 perturbe le moins possible l'écoulement d'air dans la veine secondaire 20. L'air circulant au travers de ces deuxièmes conduits 76est également redressé et ressort selon la direction longitudinale

Selon un premier mode de réalisation d'un autre aspect de l'invention, relatif à la disposition relative des différents conduits 74, 76, pour favoriser les échanges de chaleur, comme représenté en détails à la figure 4, les deuxièmes conduits 76 sont disposés transversalement entre les premiers conduits 74 et la paroi d'extrados 68.

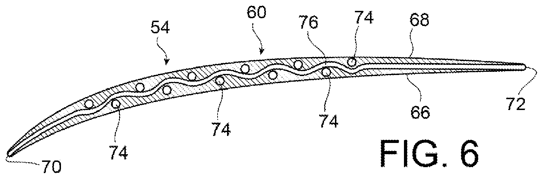

Selon un deuxième mode de réalisation de cet autre aspect de l'invention, et comme représenté en détails à la figure 6, chaque deuxième conduit 76 présente des ondulations dans son plan principal longitudinal transversal.

Ces ondulations permettent au deuxième conduit 76 de cheminer entre les premiers conduits.

Ainsi, chaque premier conduit est associé à un tronçon arqué de chaque deuxième conduit 76 et est situé à l'intérieur de la portion concave du tronçon arqué.

Cela permet d'avoir une meilleure répartition des échanges de chaleur dans l'aube 54 et aussi d'avoir, pour une même distance entre deux premiers conduits 74 adjacents, un plus grand nombre de premiers conduits 74 dans un même corps 60.

Le matériau constitutif de l'aube 54 est ainsi choisi pour posséder de bonnes propriétés de conduction thermique. Ce matériau est en outre choisi en fonction des propriétés mécaniques de l'aube 54, en particulier lorsque l'aube 54 a un rôle structurel de liaison mécanique entre la virole 22 de carter intermédiaire et le compartiment inter-veines 18. Aussi, le matériau constitutif de l'aube 54 est choisi pour permettre sa réalisation. De préférence, l'aube 54 est réalisée par technologie additive car cette technologie permet de réaliser les différents conduits 74, 76 dans l'aube 54. Ainsi, le matériau constitutif de l'aube 54 doit permettre la mise en oeuvre de ce mode de fabrication.

D'autres modes de réalisation de l'aube 54 peuvent être envisagés, tels que le moulage et/ou l'usinage.

A titre d'exemple non limitatif de matériau possédant de bonnes propriétés de conduction thermique on cite l'aluminium.

## Revendications

1. Aube (54) de turbomachine comportant un corps (60) s'étendant principalement dans un plan défini par un axe principal B et une direction longitudinale, qui est délimité par une paroi d'intrados (66), une paroi d'extrados (68), un bord d'attaque (70) situé à une première extrémité longitudinale du corps (60) et un bord de fuite (72) situé à une deuxième extrémité longitudinale du corps (60),
dans laquelle le corps (60) de l'aube (54) comporte une pluralité de premiers conduits (74) de circulation d'un flux de gaz qui s'étendent principalement selon la direction de l'axe principal B et une pluralité de deuxièmes conduits (76) de circulation d'un deuxième flux de gaz qui s'étendent principalement selon la direction longitudinale,
**caractérisée en ce que** chaque deuxième conduit (76) comporte deux extrémités qui sont débouchantes dans l'une de la paroi d'intrados (66) ou de la paroi d'extrados (68) du corps (60).

2. Aube (54) selon la revendication précédente, **caractérisée en ce que** chaque premier conduit (74) comporte deux extrémités qui sont débouchantes dans au moins une extrémité (56, 58) du corps (60) selon l'axe principal B.

3. Aube (54) selon la revendication précédente, **caractérisée en ce que** l'ensemble des extrémités des premiers conduits (74) forme un faisceau se resserrant progressivement en se rapprochant de ladite au moins une extrémité (56, 58) du corps (60).

4. Aube (54) selon l'une quelconque des revendications précédentes, **caractérisée en ce que** chaque deuxième conduit (76) présente une ondulation selon une direction transversale perpendiculaire à un plan longitudinal vertical et chaque premier conduit (74) est disposé dans un tronçon concave du deuxième conduit (76).

5. Aube (54) selon la revendication précédente, **caractérisée en ce que** les premiers conduits (74) sont disposés transversalement de part et d'autre de chaque deuxième conduit (76).

6. Aube (54) selon l'une quelconque des revendications précédentes, **caractérisée en ce qu'**elle est réalisée par procédé de technologie additive.

7. Turbomachine (10) d'aéronef comportant une veine primaire (16) d'écoulement d'air dans laquelle sont aménagés un compresseur basse pression (30) et un compresseur haute pression (32),
une veine secondaire (20) d'écoulement d'air qui est située autour de la veine primaire (16) et coaxialement à la veine primaire (16), comportant un redresseur (52) du flux d'air s'écoulant dans la veine secondaire (20), comportant une pluralité d'aubes (54) réparties autour d'un axe principal A de la turbomachine (10),
un circuit d'air pressurisé (40) prélevant de l'air entre le compresseur basse pression (30) et le compresseur haute pression (32) ou dans le compresseur haute pression (32) pour produire un flux d'air pressurisé qui alimente au moins un composant de la turbomachine (10),
**caractérisée en ce que** la pluralité d'aubes (54) comporte au moins une aube (54) selon l'une quelconque des revendications précédentes, pour laquelle son axe principal B est orienté principalement radialement par rapport à un axe principal A de la turbomachine et la direction longitudinale est sensiblement parallèle audit axe principal A, comportant les premiers conduits (74) et les deuxièmes conduits (76) et **en ce que** le flux d'air pressurisé s'écoule dans les premiers conduits (74) de ladite au moins une aube (54) et une partie du flux d'air s'écoulant dans la veine secondaire (20) s'écoule dans les deuxièmes conduits (76) de ladite au moins une aube (54).

8. Turbomachine (10) selon la revendication précédente, **caractérisée en ce que** l'axe principal B de ladite au moins une aube est orienté principalement radialement par rapport à un axe principal A de la turbomachine et la direction longitudinale de ladite au moins une aube et les deuxièmes conduits (76) de ladite au moins une aube (54) sont sensiblement parallèles à l'axe principal A correspondant à la direction d'écoulement du flux d'air dans la veine secondaire (20).

## Patentansprüche

1. Schaufel einer Turbomaschine (54), die einen Körper (60) beinhaltet, der sich grundsätzlich in einer Ebene erstreckt, die durch eine Hauptachse B und eine Längsrichtung definiert ist, und der begrenzt ist durch eine Innenwölbungswand (66), eine Außenwölbungswand (68) und eine Anströmkante (70), die an einem ersten Längsende des Körpers (60) positioniert ist, und eine Abströmkante (72), die an einem zweiten Längsende des Körpers (60) positioniert ist,
wobei der Körper (60) der Schaufel (54) eine Vielzahl von ersten Kanälen (74) zur Umwälzung eines Gasflusses beinhaltet, die sich grundsätzlich entlang der Richtung der Hauptachse B erstrecken, und eine Vielzahl von zweiten Kanälen (76) zur Umwälzung eines zweiten Gasflusses, die sich grundsätzlich entlang der Längsrichtung erstrecken,
**dadurch gekennzeichnet, dass** jeder zweite Kanal (76) zwei Enden beinhaltet, die in eine der Innenwölbungswände (66) oder der Außenwölbungswände (68) des Körpers (60) münden.

2. Schaufel (54) nach dem vorhergehenden Anspruch, **dadurch gekennzeichnet, dass** jeder erste Kanal (74) zwei Enden beinhaltet, die in mindestens ein Ende (56, 58) des Körpers (60) münden, entlang der Hauptachse B.

3. Schaufel (54) nach dem vorhergehenden Anspruch, **dadurch gekennzeichnet, dass** die Gesamtheit der Enden der ersten Kanäle (74) ein Bündel bilden, das sich dem mindestens einen Ende (56, 58) des Körpers (60) nähernd progressiv verengt.

4. Schaufel (54) nach einem der vorhergehenden Ansprüche, **dadurch gekennzeichnet, dass** jeder zweite Kanal (76) eine Wellung entlang einer Querrichtung aufweist, die perpendikular zu einer vertikalen Längsebene ist, und jeder erste Kanal (74) in einem konkaven Abschnitt des zweiten Kanals (76) angeordnet ist.

5. Schaufel (54) nach dem vorhergehenden Anspruch, **dadurch gekennzeichnet, dass** die ersten Kanäle (74) quer zu beiden Seiten jedes zweiten Kanals (76) angeordnet sind.

6. Schaufel (54) nach einem der vorhergehenden Ansprüche, **dadurch gekennzeichnet, dass** sie durch ein Verfahren der Additiven Technologie hergestellt wird.

7. Turbomaschine (10) eines Luftfahrzeugs, die einen primären Pfad (16) der Luftströmung beinhaltet, in dem ein Niederdruckkompressor (30) und ein Hochdruckkompressor (32) angelegt sind,
einen sekundären Pfad (20) der Luftströmung, der um den primären Pfad (16) und koaxial zum primären Pfad (16) positioniert ist, einen Gleichrichter (52) des Luftflusses beinhaltend, der in den sekundären Pfad (20) strömt, eine Vielzahl von Schaufeln (54) beinhaltend, die um eine Hauptachse A derTurbomaschine (10) verteilt sind,
einen Druckluftkreislauf (40), der Luft zwischen dem Niederdruckkompressor (30) und dem Hochdruckkompressor (32) oder im Hochdruckkompressor (32) entnimmt, um einen Druckluftfluss zu erzeugen, der mindestens eine Komponente der Turbomaschine (10) versorgt,
**dadurch gekennzeichnet, dass** die Vielzahl der Schaufeln (54) mindestens eine Schaufel (54) nach einem der vorhergehenden Ansprüche beinhaltet, wobei ihre Hauptachse B grundsätzlich radial zu einer Hauptachse Ader Turbomaschine ausgerichtet ist und die Längsrichtung im Wesentlichen parallel zur Hauptachse A ist, die ersten Kanäle (74) und die zweiten Kanäle (76) beinhaltend, und dadurch, dass der Druckluftfluss in die ersten Kanäle (74) der mindestens einen Schaufel (54) strömt, und ein Teil des Luftflusses, der in den sekundären Pfad (20) strömt, in die zweiten Kanäle (76) der mindestens einen Schaufel (54) strömt.

8. Turbomaschine (10) nach dem vorhergehenden Anspruch, **dadurch gekennzeichnet, dass** die Hauptachse B der mindestens einen Schaufel grundsätzlich radial zu einer Hauptachse A derTurbomaschine ausgerichtet ist und die Längsrichtung der mindestens einen Schaufel und die zweiten Kanäle (76) der mindestens einen Schaufel (54) im Wesentlichen parallel zur Hauptachse A sind, die der Strömungsrichtung des Luftflusses im sekundären Pfad (20) entspricht.

## Claims

1. Turbomachine vane (54) comprising a body (60) extending principally in a plane defined by a principal axis B and a longitudinal direction, that is delimited by an intrados wall (66), an extrados wall (68), a leading edge (70) located at a first longitudinal end of the body (60) and a trailing edge (72) located at a second longitudinal end of the body (60),
wherein the body (60) of the vane (54) contains a plurality of first ducts (74) carrying the circulation of a gas flow that extend principally along the direction of the principal axis B and a plurality of second ducts (76) carrying the circulation of a second gas flow that extend principally along the longitudinal direction,
**characterised in that** each second duct (76) comprises two ends that open up in either the intrados wall (66) or the extrados wall (68) of the body (60).

2. Vane (54) according to the preceding claim, **characterised in that** each first duct (74) comprises two ends that are open at at least one end (56, 58) of the body (60) along the principal axis B.

3. Vane (54) according to the preceding claim, **characterised in that** the set of the ends of the first ducts (74) forms a bundle that progressively narrows as the distance from said at least one end (56, 58) of the body (60) decreases.

4. Vane (54) according to any one of the preceding claims, **characterised in that** each second duct (76) has a corrugation in a transverse direction perpendicular to a vertical longitudinal plane and each first duct (74) is located in a concave segment of the second duct (76).

5. Vane (54) according to the preceding claim, **characterised in that** the first ducts (74) are arranged transversely on each side of each second duct (76).

6. Vane (54) according to any one of the preceding claims, **characterised in that** it is manufactured using an additive technology process.

7. Aircraft turbomachine (10) comprising a core air flow stream (16) passing through a low pressure compressor (30) and a high pressure compressor (32),
a bypass air flow stream (20) that is located around and coaxial with the core flow stream (16), comprising a stator vane assembly (52) for the air flow through the bypass flow stream (20), comprising a plurality of vanes (54) distributed around a principal axis A of the turbomachine (10),
a pressurised air circuit (40) that draws off air between the low pressure compressor (30) and the high pressure compressor (32) or in the high pressure compressor (32), to produce a pressurised air flow that supplies at least one component of the turbomachine (10),
**characterised in that** the plurality of vanes (54) comprises at least one vane (54) according to any one of the preceding claims, the principal axis B of which is oriented primarily radially from a principal axis A of the turbomachine and the longitudinal direction is substantially parallel to said principal axis A, comprising the first ducts (74) and the second ducts (76) and **in that** the pressurized air flow passes through the first ducts (74) of said at least one vane (54) and part of the air flow flowing in the bypass flow stream (20) passes through the second ducts (76) of said at least one vane (54).

8. Turbomachine (10) according to the preceding claim, **characterised in that** the principal axis B of said at least one vane is oriented principally radially from a principal axis A of the turbomachine and the longitudinal direction of said at least one vane and the second ducts (76) of said at least one vane (76) are substantially parallel to the principal axis A corresponding to the direction of the air flow in the bypass flow stream (20).
